# EUROPÄISCHE PATENTANMELDUNG

(11) **EP 3 156 282 A1**
(43) Veröffentlichungstag der Anmeldung: **19.04.2017**
(21) Anmeldenummer: 16193691.9
(22) Anmeldetag: 13.10.2016
(51) Int. Cl.: B60P 3/36, B60P 3/34, B60P 3/32, B60P 3/38

(54) **WOHNMOBIL MIT VERSCHIEBBAREM INNENAUFBAU**

(30) Priorität: 13.10.2015 DE 102015117421
(71) Anmelder: Hartmann, Hans, 92265 Edelsfeld (DE)
(72) Erfinder: Hartmann, Hans, 92265 Edelsfeld (DE)
(74) Vertreter: Schön, Christoph

(57) **Zusammenfassung**

Ein Wohnmobil (1) mit einem Innenraum umfasst einen Innenraum mit einem Schlafbereich (30), einem Nassbereich (40) und einem Aufenthaltsbereich (50). Der Nassbereich (40) weist eine Dusche (45) und/oder eine Toilette (43) und/oder ein Waschbecken (47) auf. Der Nassbereich (40) ist durch einen Nutzer innerhalb des Wohnmobils (1) verschiebbar.

## Beschreibung

Die Erfindung betrifft ein Wohnmobil. Bei derartigen Fahrzeugen ist der zur Verfügung stehende Wohn- und Schlafbereich in der Regel sehr knapp. Hingegen soll für den Nutzer ein gemütliches Wohngefühl bestehen. Zudem ist es bei Wohnmobilen der gehobenen Klasse gewünscht, dass der Schlafbereich von dem Wohnbereich getrennt ist. So ist es z.B. nicht gewünscht, Besucher auf den Betten zu empfangen. So ist es für viele Wohnmobile typisch, dass im hinteren Abschnitt der Schlafbereich angeordnet ist und die Toilette sich in Fahrtrichtung davor befindet. Auf diese Art kann die Toilettenwand bereits teilweise den Schlafbereich von dem in Fahrtrichtung davor liegenden Wohnbereich abtrennen.

Die Aufgabe der vorliegenden Erfindung ist es, die Ausnutzung des vorhandenen Platzes besser zu realisieren. Diese Aufgabe wird mit den Merkmalen des Anspruchs 1 gelöst. Vorteilhafte Weiterbildungen ergeben sich aus den Unteransprüchen.

Ein Wohnmobil umfasst einen Innenraum, wobei der Innenraum einen Schlafbereich, einen Nassbereich und einen Aufenthaltsbereich umfasst. Der Nassbereich weist eine Dusche und/oder eine Toilette und/oder ein Waschbecken auf. Dabei ist der Nassbereich durch einen Nutzer innerhalb des Wohnmobils verschiebbar. Hieraus ergibt sich der Vorteil, dass wechselseitig der Wohnbereich dann vergrößert und gleichzeitig der nicht benötigte Schlafbereich verkleinert werden kann, wenn es gewünscht ist. Auf den ersten Blick erscheint es als ein hoher Aufwand, den gesamten Nassbereich zu diesem Zwecke zu verschieben, denn hierfür sind etliche konstruktive Bauteile notwendig: Zunächst muss der Nassbereich selbsttragend und ausreichend stabil sein. Denn aufgrund der Verschiebbarkeit ist es nicht mehr möglich, ihn am Innenraum des Wohnmobils dauerhaft ortsfest zu befestigen, wie z.B. fest zu verschrauben. Weiter muss eine Führung vorgesehen sein, die ausreichend stabil ist, um im Fahrbetrieb den Nassbereich an seiner Stelle zu halten. Ferner werden beim Verschieben des Nassbereichs erheblicher Kraftaufwand notwendig, die möglicherweise zu hoch sind, als dass der Anwender sie täglich mehrfach ausüben mag. So wird vorzugsweise ein motorischer Antrieb vorgesehen, der die Verschiebung durchführt. Es wurde erfindungsgemäß erkannt, dass es trotzdem vorteilhaft ist, diesen Aufwand zu betreiben. Denn so ist es möglich, den Schlafbereich an der bevorzugten Stelle am Ende des Fahrzeugs zu belassen und zudem den Aufenthaltsbereich 50 im vorderen Bereich zu behalten, wo bereits mit dem Fahrer- und Beifahrersitz 3 zwei Sitzmöbel vorhanden sind. Es ist also der Nassbereich in Wohnmobillängsrichtung zwischen dem Schlafbereich und dem Aufenthaltsbereich angeordnet und der Schlafbereich bzw. der Aufenthaltsbereich ist durch das Verschieben des Nassbereichs in seiner Größe veränderbar. Die Veränderung der Größe des Schlafbereichs findet in Wohnmobillängsrichtung statt.

Insbesondere kann der Nassbereich auf Führungen gelagert und ein motorischer Antrieb zur Bewegung des Nassbereichs vorgesehen sein. Dadurch wird es möglich, den Nassbereich beispielsweise durch einen einfachen Tastendruck zu verschieben. Da ein Wohnmobil eher ein Luxusgegenstand ist, wird dieser Komfort von dem Anwender gewünscht und geschätzt.

Bevorzugt ist der Nassbereich eine Nasszelle, mit zumindest einem Wandelement, welches im Wesentlichen vom Niveau des Fußbodens, bis zur Decke des Wohnmobils reicht. Auf diese Weise dient der Nassbereich als ein Raumteiler, der den Blick von dem Aufenthaltsbereich in den Schlafbereich unterbindet. Zudem wird verhindert, dass Dritte in den Nassbereich blicken können.

Bevorzugt ist nach Verschieben des Nassbereichs in Wohnmobillängsrichtung nach vorne die Liegerichtung des Schlafbereichs in Fahrzeuglängsrichtung ausgerichtet. Dies ist vorteilhaft, da so bei einem Doppelbett beide Personen in Fahrzeuglängsrichtung aus dem Bett steigen können, um z.B. nachts zur Toilette zu gehen, ohne den anderen zu stören.

Alternativ kann die Liegerichtung des Schlafbereichs in Fahrzeugquerrichtung ausgerichtet sein. Dieses Konzept kann vorteilhaft sein, um die Breite des Wohnmobils optimal zum Schlafen zu nutzen.

Vorteilhaft ist ferner, wenn der verschiebbare Nassbereich einen Behälter für Abwasser umfasst. Dieser Behälter kann bevorzugt ein Fäkalbehälter sein, der fest (aber insbesondere entnehmbar) unter dem Nassbereich befestigt ist und von der Toilette befüllt wird. So ist es nicht nötig, für den Fäkalbereich bewegliche Schlauchverbindungen zu schaffen. Für die Versorgung mit dem Nassbereich mit Wasser hingegen wird bevorzugt eine bewegliche Schlauchverbindung vorgesehen, da so der Wasservorratsbehälter ortsfest am Fahrzeug angeordnet sein kann. Ebenso kann bevorzugt für das Abwasser der Dusche und des Waschbeckens eine (oder mehrere) bewegliche Schlauchverbindung(en) vorgesehen sein, da so der Abwassertank für das Brauchwasser ortsfest am Fahrzeug angeordnet sein kann.

Ferner kann das Wohnmobil eine in Wohnmobillängsrichtung gegenüber dem Nassbereich angeordnete getrennte Spüle umfassen. Die vertikale Lage von zumindest einer Matratze des Schlafbereichs kann oberhalb der Oberkante der Spüle liegen. Hierdurch ist es möglich, dass der Schlafbereich sich in der Schlafstellung teilweise oberhalb der Spüle erstreckt. Die Spüle wird in der Regel nachts nicht benötigt, da noch ein Waschbecken des Nassbereichs vorhanden ist. So ermöglicht diese Anordnung eine bestmögliche Ausnutzung des zur Verfügung stehenden Raums. Zur Begriffsklarheit wird Folgendes definiert: Eine Spüle ist vom Prinzip her ein Waschbecken, da beide einen nach oben offenen Behälter zur Aufnahme von Flüssigkeit aufweisen. Im Rahmen dieser Schrift wird aber unter einem Waschbecken ein entsprechender Behälter verstanden, der so angeordnet ist, dass er vor den Blicken Dritter schützbar ist, wie z.B. in einem getrennten Raum oder hinter einem Vorhang. Eine Spüle ist dagegen ein entsprechender Behälter, für den kein Sichtschutz vorgesehen ist. Diese Definition lässt sich durch die Funktion begründen, da bei ersterem eine Person sich ggf. im Intimbereich wäscht und letzteres für die Reinigung von z.B. Geschirr bestimmt ist. Alternativ kann die Spüle höhenverstellbar sein. So kann die Spüle beispielsweise abgesenkt werden. Während Ihrer Verwendung wird eine Mindesthöhe gefordert, die bspw. 90 cm betragen kann. Wenn die Spüle in der Schlafstellung abgesenkt wird, so kann die Höhe des Schlafbereichs abgesenkt werden. Dadurch wird dessen Betreten erleichtert. Alternativ kann die Spüle in der Schlafstellung angehoben werden und unmittelbar unter die Decke des Wohnmobils verfahren werden. Auch auf diese Weise wird auf dem Höhenniveau des Schlafbereichs für die Schlafstellung der notwendige Platz für die Matratze geschaffen. Bei einer weiteren alternativen Ausführungsform kann die Spüle (ähnlich zu dem Nassbereich) in Fahrzeuglängsrichtung verschiebbar sein.

Die Beweglichkeit, also die Verschiebbarkeit des Nassbereichs kann unabhängig von der der Spüle sein. So ist es bspw. möglich, die Matratze in der Verlängerung des Nassbereichs in der Schlafstellung zu haben, aber die andere Matratze in der Wohnstellung. So ist es möglich, an der Spüle zu arbeiten, wenn eine Person noch schläft.

Vorteilhaft ist ferner, wenn der innerhalb des Wohnmobils verschiebbare Nassbereich entweder das Waschbecken und die Toilette umfasst oder das Waschbecken und die Dusche umfasst. Er kann ebenfalls das Waschbecken, die Toilette und die Dusche umfassen.

Auch kann der innerhalb des Wohnmobils verschiebbare Nassbereich ein erstes Raumabgrenzungsmittel umfassen, das den Nassbereich gegen den Eingangsbereich abgrenzt, und ein zweites Raumabgrenzungsmittel umfassen, das den Nassbereich gegen den Schlafbereich abgrenzt, und wobei die Dusche und/oder die Toilette und/oder das Waschbecken zwischen dem ersten und zweiten Raumabgrenzungsmittel angeordnet ist. Durch Vorsehen einer oder mehrerer Raumabgrenzungsmittel wird erreicht, dass der Nassbereich den Charakter einer Einheit aus mehreren Bauteilen umfasst und so praktisch wie ein Raum oder Zelle wirkt, der für sich als eine Einheit verschoben werden kann, und grenzt die Erfindung von Ausführungsformen ab, bei denen lediglich z.B. die Toilette verschiebbar gelagert ist. Jedes der Raumabgrenzungsmittel reicht bevorzugt vom Boden bis zur Decke des Wohnmobils. Es kann durch eine steife Wand, eine Lamellenschiebewand oder eine Tür oder dergleichen gebildet werden. Bevorzugt sind die Raumabgrenzungsmittel blickundurchlässig und/oder feuchtigkeitsdicht.

Bei allen genannten Arten der Beweglichkeit der Spüle finden die Erläuterungen in Bezug auf den Nassbereich entsprechende Anwendung.

Nachfolgend wird die Erfindung anhand eines bevorzugten Ausführungsbeispiels beispielhaft beschrieben. Es zeigen:
- Fig. 1: zeigt eine Draufsicht auf ein Wohnmobil in seiner Wohnstellung,
- Fig. 2: das Wohnmobil in seiner Schlafstellung,
- Fig. 3: eine seitliche Ansicht des Wohnmobils in seiner Schlafstellung,
- Fig. 4,: die identisch zu Fig.2 ist, wird neben Fig. 3 gezeigt, um die räumliche Anordnung zu erläutern,
- Fig. 5: eine seitliche Ansicht des Wohnmobils in seiner Wohnstellung,
- Fig. 6,: die identisch zu Fig.1 ist, wird neben Fig. 5 gezeigt, um die räumliche Anordnung zu erläutern und
- Fig. 7: ein Wohnmobil in einer alternativen Ausführungsform in einer Draufsicht der Schlafstellung.

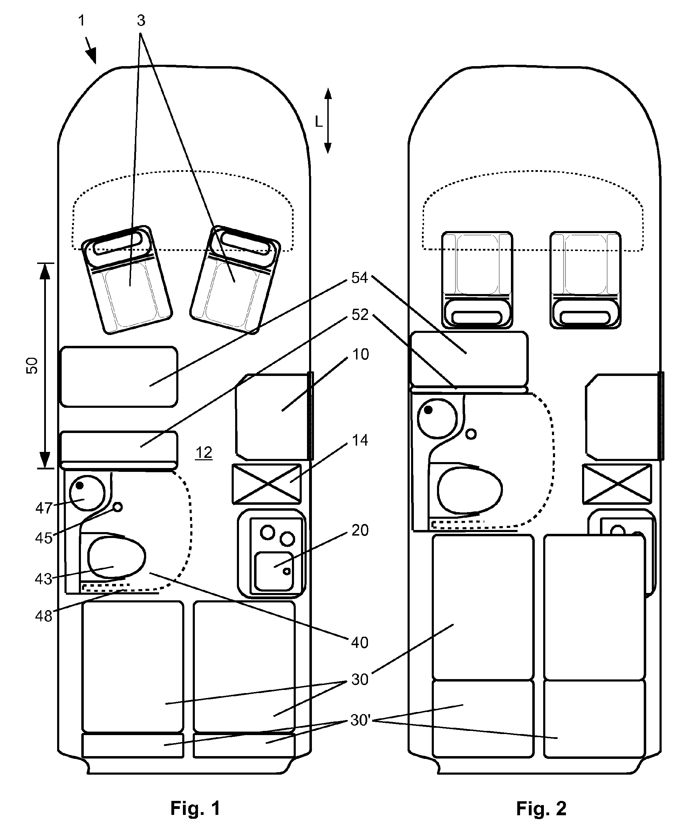

Fig. 1 zeigt eine Draufsicht auf ein Wohnmobil, wo im oberen Teil der Figur die Front des Fahrzeugs gezeigt ist. Zwei Sitze 3, nämlich ein Fahrersitz und ein Beifahrersitz sind derart nach hinten gedreht, dass sie in einen Aufenthaltsbereich 50 zeigen. Im Unterschied dazu sind die Sitze 3 bei der Darstellung gemäß Fig. 2 in Fahrtrichtung gedreht, die der Längsrichtung L des Fahrzeugs entspricht. Der Aufenthaltsbereich 50 umfasst die beiden Sitze 3, einen Tisch 54, eine Sitzbank 52 und einen dazwischen befindlichen freien Bereich zu dem Eingangsbereich 10. Der Eingangsbereich 10 ist leicht abgesenkt und mit einer Tür versehen, so dass man hierüber den Aufenthaltsbereich 50 betreten kann.

Der Aufenthaltsbereich 50 wird in der Fahrzeuglängsrichtung L auf einer Seite durch einen Nassbereich 40 begrenzt. Der Nassbereich 40 hat zumindest eine Wand, die ihn zu dem Aufenthaltsbereich 50 abgrenzt. Zusätzlich kann er eine Lamellenschiebewand 48 umfassen. Die Lamellenschiebewand 48 umfasst eine Vielzahl von vertikalen Leisten, die miteinander verbunden sind und über Führungen am Boden des Nassbereichs und an einer oberen Führung des Nassbereichs 40 befestigt sind. In Fig. 1 ist die Lamellenschiebewand 48 mit gestrichelten Linien dargestellt. In dem Abschnitt, der zwei parallele gestrichelte Linien aufweist, kann sie eingeschoben werden, wie dies beim Öffnen der Schiebewand 48 geschieht, wenn eine Person den Nassbereich 40 betreten oder verlassen will. Alternativ zur Lamellenschiebewand kann bspw. eine (Schwenk-)Tür vorgesehen sein. Der Schlafbereich 30 ist über den Nassbereich und eine Tür oder Schenktür oder Schiebewand gegenüber dem Aufenthaltsbereich 50 abtrennbar. Der Nassbereich 40 umfasst eine Toilette 43, ein Waschbecken 47 und/oder eine Dusche. Die Dusche selbst ist in den Figuren nicht gezeigt, sondern lediglich durch einen Duschablauf 45 angedeutet.
In Fahrtrichtung ist hinter dem Nassbereich 40 ein Schlafbereich 30 angeordnet, der zwei Matratzen 30 umfasst. In Fig. 1 ist eine Wohnstellung des Wohnmobils gezeigt, bei der Oberkörperteile 30' der Matratzen 30 vertikal aufgerichtet sind. In dieser Anordnung ist die Länge des Schlafbereichs nicht für ein ausgestrecktes Schlafen ausreichend.

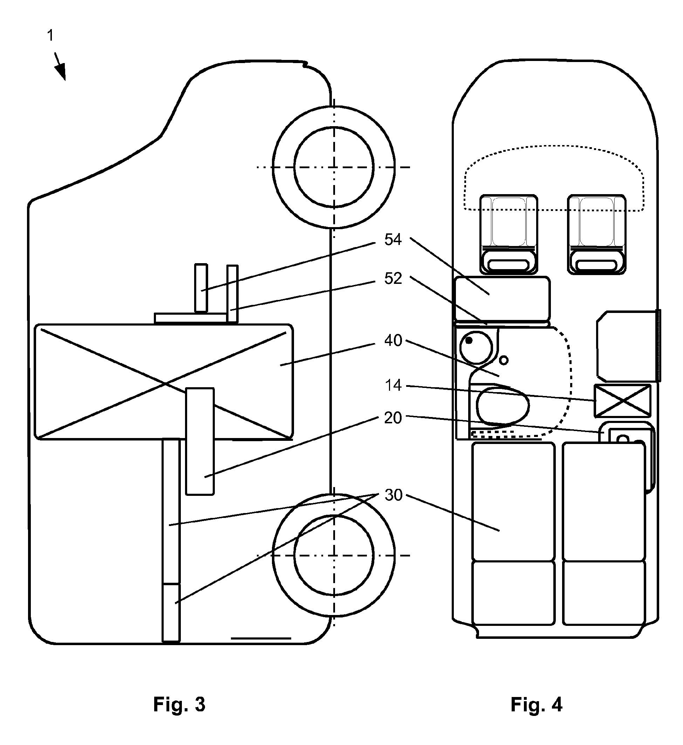

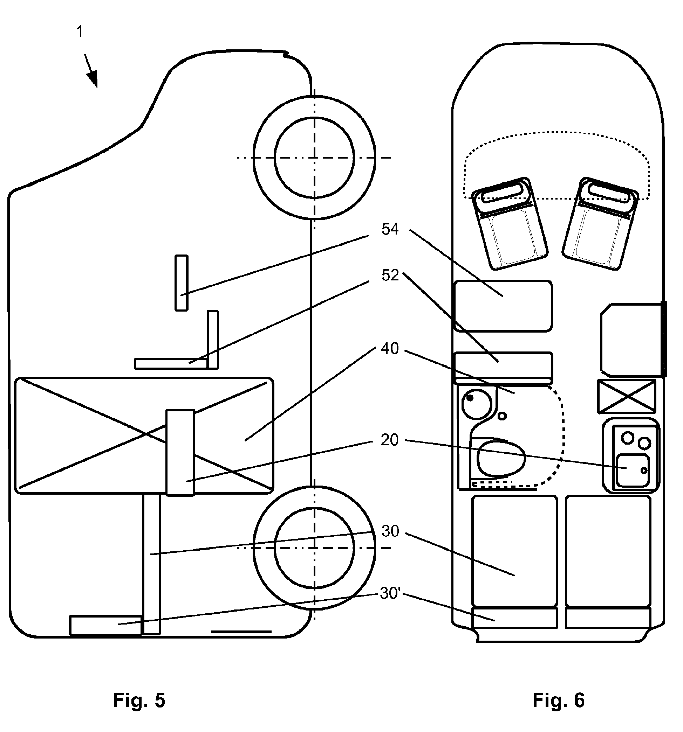

Im Gegensatz dazu ist in Fig. 2 das Wohnmobil 1 in einer Schlafstellung gezeigt. Im Vergleich der Fig. 1 und 2 ist ersichtlich, dass der Nassbereich 40 in Fahrzeuglängsrichtung nach vorne verschoben ist. Entsprechend ist der Aufenthaltsbereich 50 verkürzt. Die Sitzbank 52 ist unmittelbar an den Tisch 54 verschoben, so dass sie nicht mehr benutzbar ist. Bei alternativen Ausführungsformen, kann auch der Tisch verschiebbar sein oder er kann vor dem Verschieben des Nassbereichs 40 eingeklappt werden, um so noch mehr Verschiebungsplatz für den Nassbereich 40 zu schaffen. Durch das Verschieben des Nassbereichs 40 ist der Schlafbereich vergrößert worden. So wurde der Hauptkörper 30 der Matratze mit verschoben, so dass der Oberkörperteil 30' abgeklappt werden kann (siehe den Unterschied von Fig. 3 zu Fig. 5). Alternativ kann der abklappbare Bereich der Matratze auch an der nassbereichsseitigen Seite des Schlafbereichs 30 sein. Auch kann statt eines abklappbaren Bereichs ein Einlageteil in den entstandenen Platz gelegt werden. In jedem dieser Fälle wird der Schlafbereich so vergrößert, dass ein entspanntes Schlafen möglich ist.

In der Fahrzeugmitte ist ein Mittelgang 12 vorgesehen, der zum Schlafbereich führt. Auf der einen Seite (gemäß den Figuren links) des Mittelgangs 12 ist der Nassbereich 40 vorgesehen. Auf der anderen Seite des Mittelgangs 12 sind ein Staubereich 14 und eine Spüle 20 vorgesehen. Fig. 3 zeigt die Spüle 20 in einer schematischen seitlichen Ansicht, um die Höhenlage zu zeigen. Die Matratze des Schlafbereichs 30 ist oberhalb der Spüle angeordnet. Somit liegt die Höhe des Schlafbereichs deutlich höher, als es sonst bei Betten üblich ist. Auf diese Weise wird unter den Betten Stauraum geschaffen. Zudem wird es möglich, die Matratzen 30, wie oben ausgeführt ohne eine Veränderung der Spüle 20 zu verschieben. Die Matratze 30 liegt in der Schlafstellung entsprechend oberhalb der Spüle 20. Für das einfache Betreten des Betts ist eine kleine Leiter oder Stufen vorgesehen.

Fig. 5 und 6 zeigen die Situation in der Wohnstellung. In dieser ist der Schlafbereich deutlich verkleinert, wie es bereits in Bezug auf Fig. 1 erläutert wurde. Anders als in der Schlafstellung (siehe Fig. 2, 3 oder 4) ist die Spüle 20 nicht mehr abgedeckt und kann benutzt werden. Da dann üblicherweise kein Bedarf besteht, z.B. Geschirr zu spülen, wenn man schlafen will, stellt es keine Einschränkung des Komforts dar, dass man in der Schlafstellung die Spüle 20 nicht verwenden kann. Vielmehr wird auf diese Art der Platz besser genutzt und führt dazu, dass bei gleichen Fahrzeugabmessungen der Aufenthaltsbereich 50 vergrößert ist.

In den Figuren ist zudem der Staubereich 14 gezeigt, der zwischen dem Eingangsbereich 10 und der Spüle 20 angeordnet ist. Der Staubereich 14 kann sich über die gesamte Raumhöhe erstrecken oder alternativ bis zur Oberkante der Spüle reichen, um so einen Ablagebereich zu bilden.

In einer alternativen Ausführungsform kann entweder kein Staubereich vorgesehen sein, oder der Staubereich 14 kann mit der Spüle 20 im Platz ausgetauscht sein. Durch Letzteres ist es möglich, dass die Matratze des Schlafbereichs 30 in keinem Zustand oberhalb der Spüle sein muss. (in den Figuren nicht gezeigt) Vielmehr kann in diesem Fall die Matratze oberhalb des Staubereichs 14 liegen.

Aus Gründen der Übersichtlichkeit ist das Wasserzufuhr- und Abflusssystem des Nassbereichs nicht gezeigt. Im Fahrzeug ist zunächst ein Wasservorratstank vorhanden, der über ein Rohr-Schlauchsystem mit der Toilette 43, der Dusche 45, dem Waschbecken 47 und der Spüle 20 verbunden ist. Der Wasservorratstank ist bevorzugt ortsfest am Wohnmobil 1 befestigt und eine entsprechend flexible Schlauchführung sorgt dafür, dass die Wasserzufuhr für den Nassbereich 40 bei dessen Verschieben nicht abreißt. An den Ablauf der Toilette 43 ist ein Fäkaltank angeschlossen. Dieser ist bevorzugt an oder in dem Nassbereich 40 angeordnet und wird folglich mit dem Nassbereich 40 verschoben. Zum Zweck der Entleerung kann der Fäkaltank entnommen werden. Dazu wird der Nassbereich 40 in eine vorbestimmte Position verschoben. Dies kann bspw. die Wohnstellung oder die Schlafstellung sein. In dieser Stellung ist für den Fäkaltank eine Entnahmeöffnung an der Außenwand des Wohnmobils vorgesehen, so dass der Fäkaltank einfach entnommen, entleert und wieder eingesetzt werden kann.

Das Abwasser von dem Waschbecken 47 und der Dusche 45 wird bevorzugt nicht in den Fäkaltank geleitet. Vielmehr ist zu diesem Zweck der Nassbereich mit einem Abwasserschlauchsystem mit einem Abwassertank verbunden, der ortsfest an dem Wohnmobil befestigt ist.

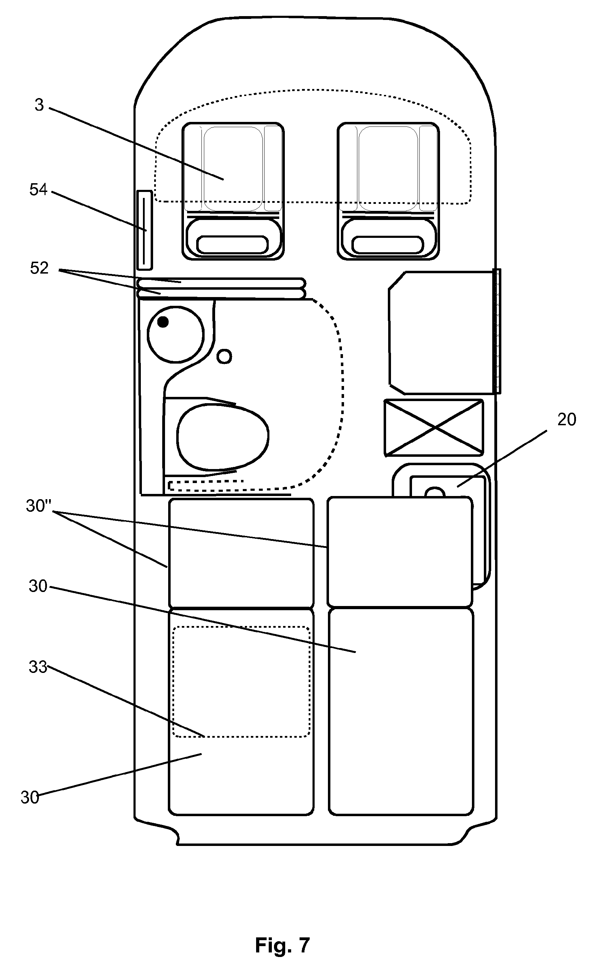

In der Darstellung der Fig. 7 ist ein Wohnmobil, gezeigt, dass eine geringere Gesamtlänge aufweist, als die vorstehend beschriebene Ausführungsform. In der gezeigten Darstellung ist die Schlafstellung gezeigt. Dabei der Schlafbereich 30 in seiner vergrößerten Stellung, wobei die Matratzenlänge bspw. 2 m betragen kann. In dieser Ausführungsform sind die Matratzen jeweils zweiteilig, mit einem Hauptteil 30, welches ortsfest am Fahrzeug aufliegt (oder befestigt ist) und dabei am Fahrzeugheck liegt. In der Fahrzeuglängsrichtung (L) davorliegend ist jeweils ein Fußteil 30" angeordnet. Wenn das Wohnmobil 1 in die Wohnstellung gebracht wird, so wird der Nassbereich 40 an das Matratzenhauptteil 30, oder zumindest in dessen Nähe verschoben. Um dieses Verschieben zu ermöglichen, muss zumindest auf der Seite des Nassbereichs, bevorzugt auf beiden Seiten, das jeweilige Fußteil 30" entfernt oder anders orientiert werden. Dafür gibt es bevorzugt zwei Ausführungsformen:

Bei der ersten alternativen Ausführungsform kann das Fußteil 30" entnehmbar sein. So kann der Anwender dieses Matratzenteil manuell anheben und an die Stelle legen, die in Fig. 7 mit der gestrichelten beispielhaften Lage 33 skizziert ist. Dabei kann der Anwender bevorzugt beide Fußteile 30" an diese Stelle legen. Dies hat den Vorteil, dass der Fahrer des Wohnmobils 1 bei der Fahrt auf der rechten Fahrzeugseite innerhalb des Fahrzeugs einen freien Blick nach hinten auf den nachfolgenden Verkehr hat. Auch können zumindest die links gezeigte Matratze, alternativ bei beide Matratzen, jeweils einstückig und klappbar um eine Trennlinie zwischen dem unbeweglichen Hauptkörper und dem Fußteil 30" sein. So wird das Fußteil 30" in die gezeigte Lage 33 geklappt. Ein Seilzug (nicht gezeigt) kann mit der Bewegungsvorrichtung des Nassbereichs 40 gekoppelt sein. Über einen dreh- oder schwenkbaren Galgen kann der Seilzug an den jeweiligen Fußteilen 30" (oder einem kombinierten gemeinsamen Fußteil über beide Liegeflächen) gekoppelt sein, und automatisch anhebbar sein. So muss der Anwender die Fußteile 30", die ein nennenswertes Gewicht haben können, nicht manuell bewegen. Alternativ zu dem Galgen kann an der Decke des Wohnmobils eine C-Schiene integriert sein, in dem ein Lagerelement schieb- oder rollbar gelagert ist und als Lagerpunkt für den Seilzug dient. Eine Flaschenzugbauweise mit zumindest einem Umlenkrad kann die Kraft untersetzen, so dass ein Bewegen der Fußteile 30 einfacher ist. So ist ein manuelles Bewegen des(r) Fußteils(e) einfach möglich. Auch über diese Konstruktion ist es möglich, die Liegeverlängerung des Fußteils 30" zu montieren oder zu entfernen, ohne dass der Anwender das Fußteil 30" manuell anheben muss.

In der zweiten alternativen Ausführungsform kann ein Seilzug mit dem Fußende (oder den Fußenden) der Matratze(n) gekoppelt sein. Die Bewegung des Nassbereichs 40 sorgt dafür, dass bei seiner Bewegung in die Wohnstellung zumindest eine, bevorzugt beide Matratzen fußendseitig angehoben werden. Auch hierüber kann der Platz geschaffen werden, der notwendig ist, damit der Nassbereich in den Schlafbereich verfahren werden kann. Beim Bewegen des Nassbereichs 40 in seine Schlafstellung werden die angehobenen Abschnitte wieder abgesenkt. Unterhalb der Matratze kann in allen Ausführungsformen ein teleskopierbarer Abschnitt liegen, der bspw. an dem Nassbereich 40 gelagert ist und relativ zu dem Hauptteil des Betts verfahrbar ist. Hierüber wird eine Auflagefläche für das Fußteil 30" bereitgestellt. Auch kann alternativ der teleskopierbare Abschnitt ausschließlich am Bettteil geführt sein und sich an dem Fußboden abstützen.

In der in Fig. 7 gezeigten verkürzten Variante eines Wohnmobils, reicht der Platz in Längsrichtung nicht aus, im Wohnbereich dann einen Tisch und/oder einen Sitz und/oder eine Sitzbank zu haben, wenn das Wohnmobil in seiner Schlafstellung ist. Statt dessen wird der Nassbereich unmittelbar in die Nähe zu den Fahrer- und Beifahrersitz 3 verfahren. Die Sitzbank 52 kann dabei eine nach oben hochklappbare Sitzfläche aufweisen, wie dies in Fig. 7 figürlich angedeutet ist. Auch muss keine fest angebrachte Sitzbank verwendet werden, sondern frei bewegliche Stühle Alternativ und/oder zusätzlich kann auch der Tisch 54 faltbar und/oder wegklappbar sein, so dass er in dieser Stellung keinen Platz in Fahrzeuglängsrichtung braucht. Gemäß Fig. 7 ist beispielhaft gezeigt, dass der Tisch 54 einklappbar ist und so verschiebbar, dass er seitlich neben dem Fahrersitz 3 verstaut werden kann.

Bei den vorgenannten Ausführungsformen war stets ein Gang, bevorzugt ein Mittelgang, vorgesehen, über den der Benutzer zu jedem Zeitpunkt, und insbesondere unter Benutzung von nur einer Tür zum Schlafbereich 30 gelangen konnte. Alternativ kann der Nassbereich in Fahrzeugquerrichtung verbreitert sein und zwei Türen aufweisen, die ihn jeweils zu dem Aufenthaltsbereich 50 und zu dem Schlafbereich 30 abgrenzen. In diesem Fall erstreckt sich der Nassbereich über den in Fig. 1 bezeichneten Mittelgang 12. Dabei können z.B. schwenkbare Türen zum Einsatz kommen oder sonstige Schiebeelemente, wie Schiebetüren, entweder einstückig oder in der vorstehend beschriebenen Lamellenbauweise.

### Bezugszeichen:

- 1: Wohnmobil
- 3: Fahrer-und Beifahrersitz
- 10: Eingangsbereich
- 12: Mittelgang
- 14: Staubereich
- 20: Spüle
- 30: Betten, Schlafbereich
- 30': Oberkörperteil als Teil des Schlafbereichs
- 30": Fußteil
- 33: Beispielhafte Lage des Fußteils 30" in der Wohnstellung des Wohnmobils
- 40: Nassbereich
- 43: Toilette
- 45: Duschablauf, Dusche
- 47: Waschbecken
- 48: Lamellenschiebewand
- 50: Aufenthaltsbereich
- 52: Sitzbank
- 54: Tisch

## Patentansprüche

1. Wohnmobil (1) mit einem Innenraum, wobei der Innenraum einen Schlafbereich (30), einen Nassbereich (40) und einen Aufenthaltsbereich (50) umfasst und der Nassbereich (40) eine Dusche (45) und/oder eine Toilette (43) und/oder ein Waschbecken (47) aufweist
**dadurch gekennzeichnet, dass**
der Nassbereich (40) innerhalb des Wohnmobils (1) verschiebbar ist.

2. Wohnmobil (1) gemäß Anspruch 1, **dadurch gekennzeichnet, dass** der Nassbereich (40) in Wohnmobillängsrichtung (L) zwischen dem Schlafbereich (30) und dem Aufenthaltsbereich (50) angeordnet ist und der Schlafbereich (30) durch das Verschieben des Nassbereichs (40) in Wohnmobillängsrichtung in seiner Größe veränderbar ist.

3. Wohnmobil (1) gemäß Anspruch 1 oder 2, **dadurch gekennzeichnet, dass** der Nassbereich (40) auf Führungen gelagert ist und insbesondere ein motorischer Antrieb zur Bewegung des Nassbereichs (40) in Wohnmobillängsrichtung vorgesehen ist.

4. Wohnmobil (1) gemäß einem der vorangegangenen Ansprüche, **dadurch gekennzeichnet, dass** der Nassbereich (40) eine Nasszelle ist mit zumindest einem Wandelement, welches im Wesentlichen vom Niveau des Fußbodens bis zur Decke des Wohnmobils (1) reicht.

5. Wohnmobil (1) gemäß einem der vorangegangenen Ansprüche, **dadurch gekennzeichnet, dass** die Liegerichtung des Schlafbereichs (30) in Fahrzeuglängsrichtung (L) angeordnet ist.

6. Wohnmobil (1) gemäß einem der Ansprüche 1 bis 4, **dadurch gekennzeichnet, dass** die Liegerichtung des Schlafbereichs (30) in Fahrzeugquerrichtung angeordnet ist.

7. Wohnmobil (1) gemäß einem der vorangegangenen Ansprüche, **dadurch gekennzeichnet, dass** der verschiebbare Nassbereich (40) einen Behälter für Abwasser, insbesondere einen Fäkalienbehälter, umfasst.

8. Wohnmobil (1) gemäß einem der vorangegangenen Ansprüche, **dadurch gekennzeichnet, dass** das Wohnmobil (1) ferner eine von dem Nassbereich (40) getrennte Spüle (20) umfasst und die vertikale Lage von zumindest einer Matratze des Schlafbereichs (30) in Schlafstellung oberhalb der Oberkante der Spüle (20) liegt.

9. Wohnmobil (1) gemäß einem der vorangegangenen Ansprüche, **dadurch gekennzeichnet, dass** die Spüle (20) höhenverstellbar und/oder in Fahrzeuglängsrichtung (L) längsverschiebbar ist.

10. Wohnmobil (1) gemäß Anspruch 9, wobei die Längsverschiebbarkeit und/oder die Höhenverstellbarkeit von der Spüle (20) unabhängig von der Verschiebbarkeit des Nassbereichs (40) ist.

11. Wohnmobil (1) gemäß einem der vorangegangenen Ansprüche, wobei der innerhalb des Wohnmobils (1) verschiebbare Nassbereich (40) entweder das Waschbecken (47) und die Toilette (43) umfasst oder das Waschbecken (47) und die Dusche (45) umfasst.

12. Wohnmobil (1) gemäß einem der vorangegangenen Ansprüche, wobei der innerhalb des Wohnmobils (1) verschiebbare Nassbereich (40) ein erstes Raumabgrenzungsmittel umfasst, das den Nassbereich (40) gegen Eingangsbereich (10) abgrenzt, und ein zweites Raumabgrenzungsmittel umfasst, das den Nassbereich (40) gegen den Schlafbereich (30) abgrenzt, und wobei die Dusche (45) und/oder die Toilette (43) und/oder das Waschbecken (47) zwischen dem ersten und zweiten Raumabgrenzungsmittel angeordnet ist.
